(19) Europäisches Patentamt
European Patent Office
Office européen des brevets

(11) Veröffentlichungsnummer: **0 116 671**
**B1**

(12) # EUROPÄISCHE PATENTSCHRIFT

(45) Veröffentlichungstag der Patentschrift: **29.01.86**

(51) Int. Cl.⁴: **C 04 B 24/26**, E 21 B 33/13

(21) Anmeldenummer: **83104506.7**

(22) Anmeldetag: **07.05.83**

(54) **Zementschlämme für Tiefbohrungen mit einem Gehalt an Copolymerisaten zur Verminderung des Wasserverlustes.**

(30) Priorität: **24.01.83 DE 3302168**

(43) Veröffentlichungstag der Anmeldung: **29.08.84 Patentblatt 84/35**

(45) Bekanntmachung des Hinweises auf die Patenterteilung: **29.01.86 Patentblatt 86/5**

(84) Benannte Vertragsstaaten: **AT DE FR GB IT NL**

(56) Entgegenhaltungen:
**EP-A-0 023 712**
**DE-C-2 444 108**
**FR-A-2 195 644**
**US-A-3 465 825**
**US-A-3 994 852**
**US-A-4 015 991**
**US-A-4 053 323**
**US-E-29 595**

(73) Patentinhaber: **HOECHST AKTIENGESELLSCHAFT, Postfach 80 03 20, D-6230 Frankfurt am Main 80 (DE)**

(72) Erfinder: **Hille, Martin, Dr., In den Eichen 46, D-6237 Liederbach (DE)**
Erfinder: **Friede, Wolfgang, Oberortstrasse 29, D-6236 Eschborn (DE)**
Erfinder: **Wittkus, Heinz, Manderscheider Strasse 9, D-6000 Frankfurt am Main 71 (DE)**
Erfinder: **Engelhardt, Friedrich, Dr., Hünfelder Strasse 20, D-6000 Frankfurt am Main 61 (DE)**
Erfinder: **Riegel, Ulrich, Steinäckerstrasse 6, D-6000 Frankfurt am Main 61 (DE)**

**EP 0 116 671 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft die Verwendung von Mischpolymerisaten zur Verminderung der Wasserabgabe von zu verpumpenden Zementschlämmen. Ganz besondere Bedeutung haben diese Verbindungen für die Zementation von Tiefbohrungen nach geothermischer Wärme, Erdöl und Erdgas. Die Technik des Erbohrens und der Komplettierung tiefer Sonden hat heute einen sehr hohen Stand erreicht. Nach dem Abbohren einer bestimmten Strecke wird in das Bohrloch ein Futterrohrstrang aus aneinandergeschraubten Rohren eingebracht. In den Ringraum zwischen Gebirgswand und Futterrohrstrang wird dann ein Zementschlamm gepumpt, der anschliessend abbindet. Durch diesen Zementmantel werden die Futterrohre fixiert und alle durchbohrten Formationen abgedichtet. An diese Zementschlämme werden mit zunehmender Tiefe der Bohrlöcher immer höhere Anforderungen gestellt. Zu diesem Zweck hat man verschiedene Kompositionen aus Zement, Wasser und Additiven entwickelt.

Man unterscheidet 3 wesentliche Additivgruppen:

1. Verzögerer, welche die Abbindezeit erhöhen, damit der Zementschlamm für die volle Verpumpungsphase, die bei sehr tiefen Bohrungen mehrere Stunden beträgt, ausreichend flüssig bleibt. Die bekanntesten Produkte dieses Typs sind Lignosulfonate und Carboxymethylhydroxyethylcellulosen.

2. Dispergiermittel, welche die Zementschlämme homogen dispergieren und die Viskosität herabsetzen, was zu deren besseren Verpumpung führt. Als solche Produkte werden in der US-A 3465825 Kondensationsprodukte aus Mononaphthalinsulfonaten und Formaldehyd und in der US-A 4053323 N-Sulfoalkylsubstituierte Acrylamide beschrieben. Auch die Lignosulfonate und Carboxymethylhydroxyethylcelluloseether haben neben der verzögernden eine dispergierende Wirkung auf Zementschlämme.

3. Wasserverlustreduzierer, welche die Wasserabgabe der Zementschlämme an poröse Formationen während der Verpumpung der Zementschlämme in den Ringraum zwischen Futterrohr und Bohrlochswand reduzieren. Die bekanntesten Produkte dieses Typs sind vollsynthetische Mischpolymerisate aus Acrylat/Acrylamid gemäss DE-C 28 30 528 und Blockpolymerisate aus Vinylpyrrolidon und Acrylamid gemäss GB-A 14 73 767 und die halbsynthetischen Carboxymethylhydroxyethyl- sowie Hydroxyethylcelluloseether.

Die letztgenannten Additive sind deshalb von besonderer Bedeutung, da pumpbare Zementschlämme, die nur aus Zement und Wasser bestehen, hohe Volumina Wasser abgeben, wenn sie bei der Bohrlochzementation an porösen Gesteinsschichten vorbeifliessen. Das alkalische Wasser bringt in den Formationen Tone zum Quellen und bildet mit $CO_2$ aus dem Erdgas oder Erdöl Niederschläge von Kalciumcarbonat. Beide Effekte mindern die Permeabilität der Lagerstätten und reduzieren die späteren Produktionsraten. Der Übertage für die jeweilige Zementation optimal eingestellte Zement erfährt durch die Wasserabgabe eine schwer kalkulierbare, den Pumpvorgang erschwerende Viskositätserhöhung. Die Wasserabgabe an poröse Formationen kann zu einer inhomogenen Zementmasse führen, welche nicht homogen erstarrt und für Gase, für flüssige Kohlenwasserstoffe und Wässer durchlässig ist. Dies kann zum Entweichen von Erdgas oder Erdöl durch den mit porösem Zement gefüllten Ringraum in andere Formationen und in Extremfällen bis Übertage führen. Weiterhin können aggressive saline Wasser und Gase durch den porösen Zement auf die Futterrohre wirken und diese korrodieren.

Zur Gewährleistung einer technisch einwandfreien Bohrlochszementation ist die Herabsetzung des Wasserverlustes der eingesetzten Zementschlämme notwendig. Der Wasserverlust wird dabei vergleichend mit einer Filterpresse nach API Code 29 gemessen. Dabei ist die Filterfläche 45,8 ± 0,7 $cm^2$, der Überdruck 7 ± 0,7 atü und die Filtrationszeit 30 Minuten. In letzter Zeit werden immer häufiger auch Messungen des Wasserverlustes mit der Hochtemperatur- und Hochdruck-Filterpresse (Baroid Nr. 387) durchgeführt. Man filtriert normalerweise mit einem Differenzdruck von 35 bar und gleicht die Temperatur der in der Praxis auftretenden an.

Die verbreitetste Anwendung zur Reduktion des Wasserverlustes von Zementschlämmen haben bisher die halbsynthetischen Celluloseether des Types Hydroxyethylcellulose und teilweise auch Carboxymethylhydroxyethylcelluloseether gefunden. Ihr sinnvoller Einsatz findet seine Grenzen durch die Temperaturen, denen die Zementschlämme ausgesetzt werden. Die Wirkung fällt schon über 100°C stark ab und lässt sich dann auch durch höhere Einsatzmengen nicht mehr ausgleichen. Vollsynthetische Mischpolymere, bestehend aus Acrylamid und Acrylsäure oder Vinylpyrrolidon, haben sich in tieferen Bohrungen mit höheren Sohlentemperaturen nicht durchsetzen können. Sie zeigen, besonders wenn saline Wässer zur Formulierung von Zementschlämmen eingesetzt werden, eine sehr mässige Wirkung, die bei höheren Temperaturen weiter abfällt. Saline Wässer sind bei Bohrungen auf dem Meer üblich und bei Zementationen in Salzschichten notwendig. Vollends versagen diese Produkte, wenn als Abbindebeschleuniger $CaCl_2$ eingesetzt wird. Der Stand der Technik zeigt, dass gegenwärtig eine Lücke bei Produkten zur Reduktion des Wasserverlustes von Zementschlämmen für Tiefbohrungen besteht, besonders wenn die Zementschlämme Temperaturen von über 100° C ausgesetzt und mit salinen Wässern formuliert werden.

Es wurde nun gefunden, dass man diese Wasserverluste bei Zementschlämmen für Tiefbohrungen vermindern kann, wenn man dem Zementschlamm die im folgenden beschriebenen Mischpolymerisate zusetzt. Gegenstand der Erfindung sind somit Zementschlämme aus Wasser und Zement, die ausserdem noch ein Copolymerisat enthalten, das zu 5-95 Gew.-% aus Gruppen der Formel

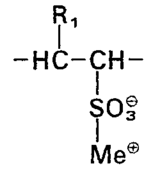

(I)

oder

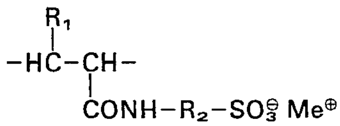

(II)

worin $R_1$ Wasserstoff oder Methyl, $R_2$ $C_2$-$C_{10}$-Alkylen und Me Ammonium, Lithium, Natrium oder Kalium bedeutet, zu 5-60 Gew.-% aus Gruppen der Formel

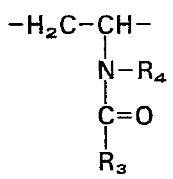

(III)

in der $R_3$ Wasserstoff, $-CH_3$ oder $-C_2H_5$ und $R_4$ $-CH_3$ oder $-C_2H_5$ oder $R_3$ und $R_4$ zusammen eine Propylengruppe, die unter Einschluss des Restes

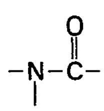

einen Pyrrolidon-Rest bildet, bedeutet, sowie zu 0-90 Gew.-% aus Gruppen der Formel

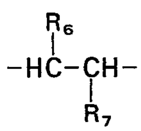

(IV)

worin $R_6$ Wasserstoff oder Methyl und $R_7$ Carbonamido, Carboxy, Cyano oder Carbomethoxy bedeutet, besteht, wobei die Reihenfolge der Komponenten beliebig ist. Die Carboxygruppen können dabei durch die nachträgliche Verseifung der Amide, Nitrile und Ester entstehen, oder direkt in Form der freien Acrylsäure einpolymerisiert werden. Bevorzugt sind solche Copolymerisate, die zu 30-80 Gew.-% aus Gruppen der Formeln I und II, zu 10-30 Gew.-% aus Gruppen der Formel III und zu 10-50 Gew.-% aus Gruppen der Formel IV bestehen. Die Molgewichte dieser Copolymerisate betrugen 250 000 bis 6 000 000, vorzugsweise 500 000 bis 2 000 000. Sie sind bereits beschrieben in DE-A 29 31 897 und DE-B 24 44 108. Die beschriebenen Mischpolymerisate werden den Zementschlämmen in Konzentrationen von 0,1 bis 3%, vorzugsweise 0,3 bis 2% zugesetzt.

Die Herstellung der zu verwendenden Copolymerisate kann in an sich bekannter Weise durch Umsetzung der Monomeren bei Temperaturen zwischen etwa −10 und +80° C, vorzugsweise bei 20 bis 60° C, in Gegenwart von geeigneten Polymerisationskatalysatoren vorgenommen werden. Die Polymerisation erfolgt zweckmässig in wässeriger Phase, gegebenenfalls können jedoch auch wässerige Lösungen von wassermischbaren organischen Lösungsmitteln, wie z.B. Methanol, Äthanol, tert.-Butylalkohol, Tetrahydrofuran oder Dimethylformamid als Polymerisationsmedium dienen. Als Polymerisations-Katalysatoren kommen vor allem Perverbindungen wie Benzoylperoxid, Acetylperoxid, tert.- Butylhydroperoxyd oder Alkali- und Ammoniumperoxidisulfat oder auch Redox-Systeme wie N-p-Tolylsulfonylmethylcarbamidsäuremethylester/Ammoniumperoxidisulfat in Betracht. Gegebenenfalls kann auch der Zusatz von Cokatalysatoren wie Dibutylaminhydrochlorid oder Spuren von Kupfersalzen zweckmässig sein. Als Polymerisations-Initiatoren können gegebenenfalls auch Verbindungen wie z.B. Diazoisobutyronitril zugesetzt werden.

Aufgrund der Formeln I, II, III und IV können als Monomere vor allem folgende Verbindungen verwendet werden:

I. Vinyl- oder Allylsulfonsäuren oder deren Alkali- oder Ammoniumsalze,

II. 2-Acrylamido-2-methyl-propansulfonsäure-(3),

III. N-Vinyl-N-methylacetamid oder N-Vinylpyrrolidon

IV. Acrylsäureamide, Acrylsäure, -nitrile oder -methylester oder die entsprechenden Methacrylverbindungen.

Die Copolymerisate fallen als viskose, vorzugsweise wässerige Lösungen an, die in dieser Form verwendet werden können. Zur Herstellung von Verseifungsprodukten der Copolymerisate wird den Polymerisatlösungen Alkalihydroxid in den erforderlichen Mengen zugegeben und auf höhere Temperaturen, zweckmässig auf etwa 85 bis 120° C, bis zur Erreichung des gewünschten Verseifungsgrades erhitzt.

Sofern es beabsichtigt ist, die Polymerisate in fester Form herzustellen, können die Polymerisatlösungen einem üblichen Verdampfungs- oder Trocknungsprozess, zweckmässig einer Sprüh- oder Walzentrocknung unterworfen werden.

Die Copolymerisate werden in Zementschlämmen eingesetzt, welche 20-85 Gew.-%, vorzugsweise 30-70 Gew.-% Wasser bezogen auf den eingesetzten trockenen Zement enthalten.

*Beispiele*

Die folgenden Beispiele zeigen die Arbeitsweise der erfindungsgemässen Verbindungen in den sehr unterschiedlichen und teilweise hochsalinen Zementschlämmen.

*Beispiel 1*

Mischpolymerisat bestehend aus:

50 Gew.-% Acrylamid
27,5 Gew.-% N-Vinyl-N-Methylacetamid
22,5 Gew.-% Na-Vinylsulfonat

*Zementmischung:*

250 g Wasser NaCl-gesättigt
500 g Zement Klasse G
2,5 g Mischpolymerisat (0,5% bezogen auf Zement)
Wasserverlust = 8,4 $cm^3$
Viskosität = 160 mPa·s (cp) nach Fann bei 3 U/min

Der Wasserverlust wurde hier wie auch in den folgenden Beispielen mit der eingangs erwähnten Filterpresse nach API bestimmt.

*Beispiel 2*

Mischpolymerisat bestehend aus:

75% Acrylamid, teilverseift
15% N-Vinyl-N-Methylacetamid
10% Acrylamidomethyl-propansulfonsäure

*Zementmischung:*

194 g Wasser 3,5% NaCl
440 g Zement Klasse G
3,3 g Mischpolymerisat (0,75% bezogen auf Zement)
Wasserverlust = 11,3 $cm^3$
Viskosität = ca. 500 mPa·s (cp) nach Fann bei 3 U/min

*Beispiel 3 a*

Mischpolymerisat bestehend aus:

65 Gew.-% Acrylamidomethyl-propansulfonsäure
20 Gew.-% N-Vinyl-N-Methylacetamid
15 Gew.-% Acrylamid

*Zementmischung:*

450 g Wasser gesättigt an NaCl
600 g Zement Klasse D
12 g Mischpolymerisat (2% bezogen auf Zement)
Wasserverlust nach 4 h Alterung bei 80° C = 25 $cm^3$
Viskosität nach 4 h Alterung bei 80° C = 200 mPa·s (cp) nach Fann bei 3 U/min

*Beispiel 3 b*

Mischpolymerisat wie 3 a
Zementmischung wie 3 a
plus 12 g Bentonit (2% bezogen auf Zement)
Wasserverlust nach 4 h Alterung bei 80° C = 12,5 $cm^3$
Viskosität nach 4 h Alterung bei 80° C = 800 mPa·s (cp) nach Fann bei 3 U/min

Hochtemperatur-Hochdruck-Wasserverlustwassermessung nach Alterung 2 h bei 160° C, gemessen bei 80° C und 35 bar Differenzdruck.

| | |
|---|---|
| Beispiel 3 a | Beispiel 3 b |
| 22 $cm^3$ | 14 $cm^3$ |

*Beispiel 4 a*

Mischpolymerisat wie 3

*Zementmischung:*

500 g Wasser
600 g Zement Klasse D
12 g Mischpolymerisat (2% bezogen auf Zement)
Wasserverlust nach 4 h Alterung bei 80° C = 9,4 $cm^3$
Viskosität nach 4 h Alterung bei 80° C = 300 mPa·s (cp) nach Fann bei 3 U/min

*Beispiel 4 b*

Mischpolymerisat wie Beispiel 3 a
Zementmischung wie Beispiel 4 a
plus 12 g Bentonit (2% bezogen auf Zement)
Wasserverlust nach 4 h Alterung bei 80° C = 4,1 $cm^3$
Viskosität nach 4 h Alterung bei 80° C = 1200 mPa·s (cp) nach Fann bei 3 U/min

Die Beispiele zeigen die grosse Anwendungsbreite der erfindungsgemässen Verbindungen in Zementschlämmen bezüglich Salinitäten der Anmischwässer und Wasser/Zementverhältnissen. Das Absenken des Wasserverlustes der Zementschlämme ist die Hauptwirkung, doch besitzt das Mischpolymerisat der Beispiele 3 und 4 auch eine erhebliche abbindeverzögernde Wirkung. So waren die Vergleichsproben ohne Mischpolymerisat schon nach 2 Stunden bei 80° C verfestigt. Durch die Variation der Monomerenverhältnisse in den Mischpolymerisaten können diese den Anforderungen der sehr unterschiedlichen Zementschlämme angepasst werden. Für Zementschlämme, die keinen höheren Temperaturen ausgesetzt werden und wo nur der Wasserverlust niedrig sein soll, kommen Mischpolymerisate gemäss den Beispielen 1 und 2 zum Einsatz. Wird der Zementschlamm zur Bildung eines Zementsteinmantels um den Futterrohrstrang einer Tiefbohrung verpumpt, wobei der Wasserverlust sehr niedrig und die Abbindezeit verzögert sein muss, dann ist es notwendig, ein Mischpolymerisat gemäss den Beispielen 3 und 4 zu verwenden.

Der Wasserverlust kann gemäss den Beispielen 3 und 4 durch Zusatz geringer Mengen Bentonit verbessert werden. Die maximale Reduktion des Wasserverlustes durch die erfindungsgemässen Mischpolymerisate ist eine Funktion der Temperatur, Zeit und Mischintensität. Dies gilt besonders für Mischpolymerisate gemäss Beispiel 3 und 4. Doch reichen bei deren Verwendung in Zementschlämmen für tiefe und heisse Bohrungen die zur Verpumpung nötige Zeit, die dabei auftretende Mischintensität und die erhöhte Temperatur für die maximale Reduktion des Wasserverlustes aus.

## Patentansprüche

1. Zementschlämme aus Wasser und Zement, dadurch gekennzeichnet, dass sie ein Copolymerisat enthalten, das zu 5-95 Gew.-% aus Gruppen der Formel

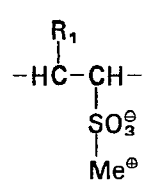

(I)

oder

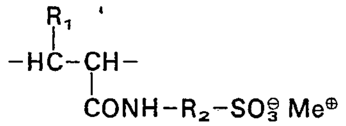

(II)

worin $R_1$ Wasserstoff oder Methyl, $R_2$ $C_2$-$C_{10}$-Alkylen und Me Ammonium, Lithium, Natrium oder Kalium bedeutet, zu 5-60 Gew.-% aus Gruppen der Formel

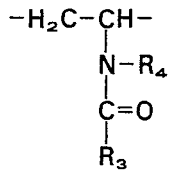

(III)

in der $R_3$ Wasserstoff, $-CH_3$ oder $-C_2H_5$ und $R_4$ $-CH_3$ oder $-C_2H_5$ oder $R_3$ und $R_4$ zusammen eine Propylengruppe, die unter Einschluss des Restes

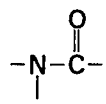

einen Pyrrolidon-Rest bildet, bedeutet, sowie zu 0-90 Gew.-% aus Gruppen der Formel

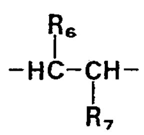

(IV)

worin $R_6$ Wasserstoff oder Methyl und $R_7$ Carbonamido, Carboxy, Cyano- oder Carbomethoxy bedeutet, besteht.

2. Zementschlämme nach Anspruch 1, dadurch gekennzeichnet, dass sie ein Copolymerisat enthalten, das zu 30-80 Gew.-% aus Gruppen der Formeln I und II, zu 10-30 Gew.-% aus Gruppen der Formel III und zu 10-50 Gew.-% aus Gruppen der Formel IV besteht.

3. Zementschlämme nach Anspruch 1, dadurch gekennzeichnet, dass sie 0,1-3 Gew.-% der Copolymerisate enthalten.

## Claims

1. Cement slurries composed of water and cement, characterized in that they comprise a copolymer consisting of 5-95% by weight of groups of the formula

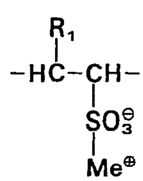

(I)

or

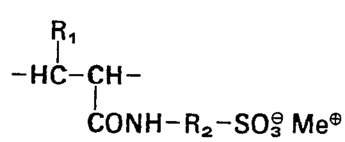

(II)

in which $R_1$ is hydrogen or methyl, $R_2$ is $C_2$-$C_{10}$-alkylene and Me is ammonium, lithium, sodium or potassium, of 5 to 60% by weight of groups of the formula

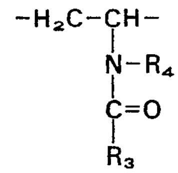

(III)

in which $R_3$ is hydrogen, $-CH_3$ or $-C_2H_5$ and $R_4$ is $-CH_3$ or $-C_2H_5$, or $R_3$ and $R_4$ together are a propylene group which, with incorporation of the radical

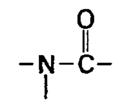

forms a pyrrolidone radical, and of 0-90% by weight of groups of the formula

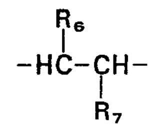

(IV)

in which $R_6$ is hydrogen or methyl and $R_7$ is carboxamido, carboxyl, cyano or carbomethoxy.

2. Cement slurries as claimed in claim 1, which comprise a copolymer composed of 30-80% by weight of groups of the formula I and II, of 10-30% by weight of groups of the formula III and of 10-50% by weight of groups of the formula IV.

3. Cement slurries as claimed in claim 1, which comprise 0.1-3% by weight of the copolymers.

## Revendications

1. Boues de ciment constituées d'eau et de ciment, caractérisées en ce qu'elles contiennent un copolymère constitué, pour 5 à 95% en poids, de radicaux répondant à l'une des formules I ou II:

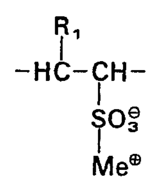

(I)

ou

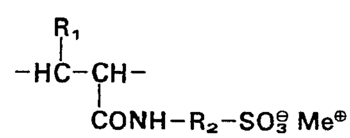

(II)

dans lesquelles $R_1$ représente l'hydrogène ou un méthyle, $R_2$ un alkylène en $C_2$-$C_{10}$ et Me l'ammonium, le lithium, le sodium ou le potassium, pour 5 à 60% en poids, de radicaux répondant à la formule III:

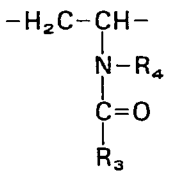

(III)

dans laquelle $R_3$ représente l'hydrogène, $-CH_3$ ou $-C_2H_5$ et $R_4$ $-CH_3$ ou $-C_2H_5$, $R_3$ et $R_4$ pouvant également former ensemble un radical propylène qui, avec le radical

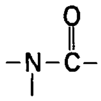

forme un radical de pyrrolidone, et pour 0 à 90% en poids, de radicaux répondant à la formule IV:

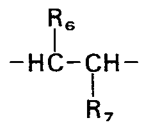

(IV)

dans laquelle $R_6$ représente l'hydrogène ou un méthyle et $R_7$ un radical carbamoyle, carboxy, cyano ou méthoxycarbonyle.

2. Boues de ciment selon la revendication 1, caractérisées en ce qu'elles contiennent un copolymère qui est constitué, pour 30 à 80% en poids, de radicaux de formules I et II, pour 10 à 30% en poids de radicaux de formule III et pour 10 à 50% en poids de radicaux de formule IV.

3. Boues de ciment selon la revendication 1, caractérisées en ce qu'elles contiennent de 0,1 à 3% en poids des copolymères.